# EUROPEAN PATENT SPECIFICATION

(11) **EP 0 753 830 B1**
(45) Date of publication and mention of the grant of the patent: **10.04.2002**
(21) Application number: 96305032.3
(22) Date of filing: 08.07.1996
(51) Int. Cl.: G06T 9/00, H03M 7/46

(54) **High-speed decompressor**
Hochgeschwindigkeitsdekodierung
Unité de décodage à grande vitesse

(30) Priority: 11.07.1995 US 502838; 11.07.1995 US 502841
(43) Date of publication of application: 15.01.1997
(73) Proprietor: XEROX CORPORATION, Rochester, New York 14644 (US)
(72) Inventor: Kao, Jean-Swey, Cupertino, California 95014-5201 (US); Medrano, Ruben, Montebello, California 90640 (US); Rodriguez, Ramond, West Covina, California 91790 (US)
(74) Representative: Skone James, Robert Edmund

(56) References cited:
- EP-A- 0 493 086
- US-A- 4 156 880
- US-A- 4 843 632
- FUJITSU SCIENTIFIC & TECHNICAL JOURNAL, vol. 19, no. 3, September 1983, pages 323-339, XP000616733 YOSHIDA ET AL.: "DEVELOPMENT OF COMPRESSOR AND EXPANDER FOR ONE SECOND FACSIMILE"
- PATENT ABSTRACTS OF JAPAN vol. 018, no. 246 (E-1546), 11 May 1994 & JP 06 030285 A (MURATA MACH LTD), 4 February 1994,

## Description

This invention relates generally to retrieval of an electronically compressed document and more particularly concerns a decompressor in which a decompressor is used for decoding CCITT, IBMMR and TIFF codes and supplying generally at least four bits of decompressed data to a high speed printing engine at each clock cycle.

With a growing need for faster printing engines, the need for faster decompressors is also growing. A fast printing engine needs a decompressor to provide a flow of decompressed data with a speed which matches the consumption rate of decompressed data by the printing engine. If the decompressor is slower than the print engine, then a gap will be shown on the printed document.

Usually, the codes, which represent the frequent color changes on the document, slow down the decompressor. Among all the codes of CCITT two-dimensional compression algorithm, IBMMR and TIFF codes some codes can potentially generate only one bit data. A sequence of these codes will result in worst case performance, which is the most frequent change of color. This effect slows down the flow of data to the printing engine.

There are decompressors which can generate two bits of decompressed data every clock cycle. However, there is still a need to further increase the speed of the decompressors.

It is an object of this invention to increase the speed of decompressing the CCITT, IBMMR and TIFF codes by generally providing four bits of decompressed data at each clock cycle. Hereinafter, for the purpose of simplicity only the CCITT codes are discussed. However, it should be noted that the disclosed embodiment of this invention can be utilized to decompress CCITT codes as well as IBMMR and TIFF codes.

EP-A-0493086 describes a decoder having long and short channel decoders. The short channel decoder has a twin set decoder such that two bits of decompressed data are guaranteed per decoding cycle.

If the decoding of a first code generates a decompressed data of only one bit, then the decompressed data of a second code will be combined with the first decompressed data and the combination will be sent out.

The present invention provides a method for decompressing compressed image data comprising the steps of: a) taking a series of a given number of at least three codes and in one clock cycle identifying them as long horizontal codes which generate greater than four bits of decompressed data, or non-long horizontal codes which generate four or less bits of decompressed data; b) decoding in parallel, during one clock cycle, a non-long horizontal code series of one or more non-long horizontal codes with the decoding for each but the first code of the non-long code series being for all possible conditions of the number of bits that can be generated during the same one clock cycle by those codes in the non-long horizontal code series preceding a respective one of the codes of the non-long code series, the possible conditions being a minimum cumulative number of bits that can be generated by those codes in the non-long horizontal code series preceding a respective one of each but the first code of the non-long code series up to one bit less than a desired given minimum number of bits of decompressed data to be generated during one clock cycle; c) selecting the decompressed data of the first code in the non-long horizontal code series if either the first code generates at least the desired given minimum number of bits of decompressed data or the first code is the only code in the non-long horizontal code series; d) selecting the decompressed data of the first code in the non-long horizontal code series and the decompressed data for the second code in the non-long horizontal code series, which corresponds to the possible decompressed data condition that matches the actual number of bits generated by the decompressed data of the first code, if the number of bits of decompressed data generated by the first code is less than the desired given minimum number of bits and either the first two codes generate a cumulative number of bits of decompressed data which is at least the desired given minimum number of bits or the second code is the last code in the non-long horizontal code series; and e) selecting the decompressed data of the first two codes in the non-long horizontal code series and any one or more of the codes in the non-long horizontal code series following the first two codes in the same manner as the selection of the decompressed data of the first two codes in the non-long horizontal code series if the cumulative number of bits of decompressed data generated by the first two codes is less than the desired given minimum number of bits, determined by either the first two codes and the one or more codes generating a cumulative total of at least the desired given minimum number of bits and the cumulative number of bits of decompressed data generated by the codes in the non-long horizontal code series prior to the last code for which the decompressed data is selected is less than the desired given minimum number of bits or the last code selected is the last code in the non-long horizontal code series.

The invention further provides a decompressor apparatus according to claim 3 of the appended claims.

In accordance with the present invention, a decompressor is disclosed which is capable of decompressing codes and sending out in most case four bits or more decompressed data.

The decompressor of this invention includes means for receiving a series of a given number of at least three codes in one clock cycle and identifying them as long horizontal codes which generate greater than four bits of decompressed data, or non-long horizontal codes which generate four or less bits of decompressed data; the given number of codes equaling a desired given minimum number of bits of decompressed data to be generated during one clock cycle.

The non-long horizontal codes will be decoded by a parallel decoder which is capable of decoding in parallel four non-long horizontal codes. After decoding the codes, the parallel decoder selects the decompressed data of the first code if the first code has generated four bits or more decompressed data or it will select a combination of the first code with the following codes if the first code has generated less four bits of data. The parallel decoder generates intermediate data based on the decoded codes and sends them to an expand data block.

The long horizontal codes will be decoded by a long code decoder. The long code decoder also generates an intermediate data based on the count of the decompressed data of a long horizontal code and sends it to the expand data block.

The expand data block receives the intermediate data from the parallel decoder, the intermediate data from the long code decoder and also the uncompressed data from the means for receiving the codes. The expand block selects the intermediate from the parallel decoder or from the long code decoder and expands the intermediate data and sends out the expanded intermediate data as decompressed data or it selects the uncompressed data and sends it out unaltered.

Embodiments of the invention will now be described, by way of example, with reference to the accompanying drawings, in which:
Figure 1 shows a block diagram of the present invention;
Figure 2 shows code patterns and their code lengths;
Figure 3 shows a detailed block diagram of the code identify and convert block;
Figure 4 shows one row of the alignment shifter;
Figure 5 shows a detailed block diagram of the PVSH code converter;
Figure 6 shows a detailed block diagram of a long code converter of Figure 3;
Figure 7 shows a portion of previous line data and a corresponding portion of current line data;
Figure 8 shows an example of a code which generates three bits of decompressed data;
Figure 9 shows an example of a code which generates two bits of decompressed data;
Figure 10 shows a detailed block diagram of the parallel decoder of Figure 1;
Figure 11 shows a table of all the possible conditions between the four codes;
Figure 12 shows a simplified table which shows different possibilities of four bits from the previous line with respect to the starting position;
Figure 13 shows the starting position of different decoders;
Figure 14 shows the starting position of encoder A with respect to the data from the previous line;
Figure 15 shows the starting position of encoder B1 with respect to the data from the previous line;
Figure 16 shows the starting position of encoder B2 with respect to the data from the previous line;
Figure 17 shows the starting position of encoder B3 and encoder D with respect to the data from the previous line;
Figure 18 shows the starting position of encoder C1 with respect to the data from the previous line;
Figure 19 shows the starting position of encoder C2 with respect to the data from the previous line; and
Figure 20 shows the intermediate data and the expanded data (uncompressed data) for different counts of a long horizontal code.

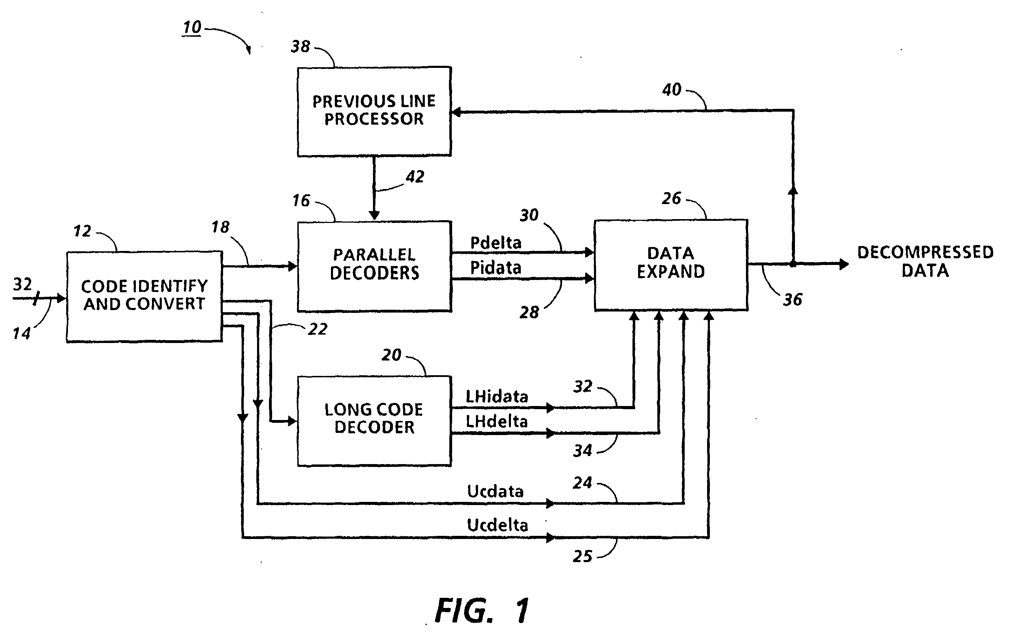

Figure 1 is a block diagram of the present invention. In the decompressor 10 of this invention, code identify and convert block 12 receives variable length codes (compressed image data) from a processor interface over a 32 bit bus 14. The code identify and convert 12 receives 32 bits of data via line 14 at each clock cycle and in the same clock cycle identifies a series of four codes and converts them into four fixed length intermediate codes. The code identify and convert block 12 also separates long horizontal codes from the non-long horizontal codes. A long horizontal code is defined as a horizontal code which generates more than four bits of decompressed data. Non-long horizontal codes, which are called PVSH codes, include pass codes, vertical codes and short horizontal codes. A short horizontal code is a code which generates four or less bits of decompressed data.

The code identify and convert block 12 sends the series of PVSH intermediate codes to parallel decoders 16 via line 18. However, if there is a long horizontal code, the code identify and convert block 12 sends the PVSH codes prior to the long horizontal code to the parallel decoders 16 and via line 18 and holds the long horizontal code and its following codes until the next clock cycle. On the next clock cycle, code identify and convert block 12 sends a intermediate code to the parallel decoders 16 and sends out a LHcount (long horizontal count) to the long code decoder 20 via line 22.

In the same clock cycle, either the parallel decoder 16 or the long code decoder 20 generates intermediate data and a count for the number of bits of the decompressed data. The intermediate data from the parallel decoder 16 is called Pidata (PVSH intermediate data) and the count for the decompressed data from the parallel decoders 16 is called Pdelta (PVSH delta). The Pidata and the Pdelta are sent from the parallel decoders 16 to the data expand block 26 via lines 28 and 30 respectively. The intermediate data from the long code decoder 20 is called LHidata (long horizontal intermediate data) and the count for the decompressed data from the long code decoder 20 is called LHdelta (long horizontal delta).

The LHidata and the LHdelta are sent from the long code decoder 20 to the data expand block 26 via lines 32 and 34 respectively. In the same clock cycle, the data expand block 26 will expand the intermediate data from either the parallel decoders 16 or the long code decoder 20 to generate decompressed data 36. The data expand block 26 will concatenate the decompressed data from each clock cycle with the decompressed data of the previous clock cycles and will store the result until there are 32 bits of decompressed data available in which case the data expand block 26 will send out 32 bits of decompressed data. The decompressed data will be sent to previous line processor 38 via line 40. The previous line processor 38 will provide the necessary data from the previous line to the parallel decoders 16 via line 42 for decompressing the PVSH codes. The previous line processor holds all the bits of one scan line.

The code identify and convert block 12 also sends out an incoming uncompressed data and its count to data expand block 26 via lines 24 and 25 respectively. In some encoding systems, if the encoded data becomes larger than the raw data, the code will be ignored and the raw data will be sent out as uncompressed data. Therefore, the decompressor has to recognize the uncompressed data and receive the uncompressed data and send it out unaltered. The expand block 26 receives the uncompressed data and sends it out unaltered.

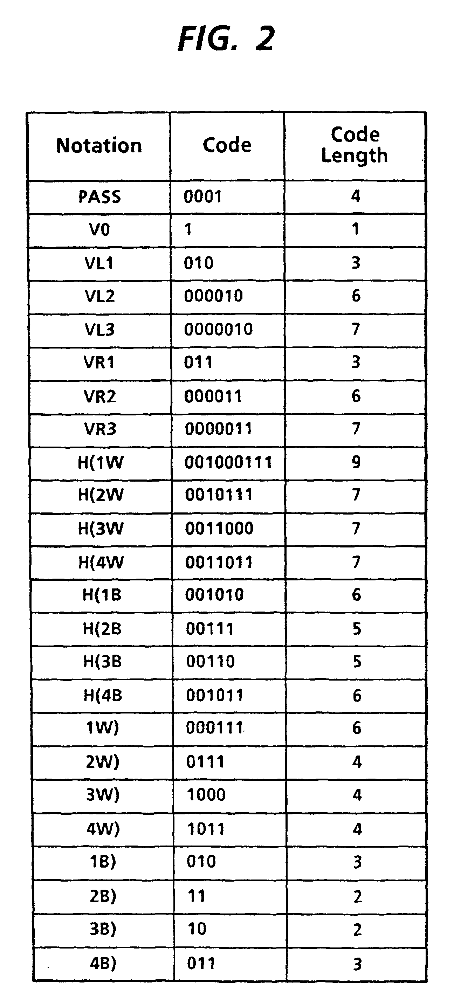

In the code identify and convert block 12 the challenge is to recognize four codes whose code length may vary from one bit to nine bits. Referring to Figure 2, there are shown code patterns and their code lengths. For example, the length of the code for VR3 is 7 bits, the length of H(1W is 9 bits or the length of pass code is 4 bits. However, as it can be observed, the length of the codes are not more than 9 bits. It should be noted that in the code notation, "(" represents the leading horizontal code and ")" represents the terminating horizontal code.

If four codes are to be identified in parallel, the possible combinations of four codes are over four thousand cases. This parallel approach results in a very large and complicated design. Another approach is to identify four codes in sequence. In this approach, after one code is identified and shifted, the second code will be identified and shifted, then the third code will be identified and shifted and finally the fourth code will be identified. This sequential approach results in a long timing delay through the sequential identifying and shifting.

In this invention a middle ground approach is taken. In this approach two codes are simultaneously identified, data will be shifted and then the next two codes are simultaneously identified. Identifying all four codes are performed in one clock cycle. The first and second codes are identified in parallel and they are both shifted so that the shifted data can be searched for the third and fourth codes in parallel. Since only two codes are needed to be identified in parallel, the complexity is greatly reduced. In this approach, there is only one shift compared to three shifts of the sequential approach. Therefore, with the approach of this invention, the timing is greatly improved.

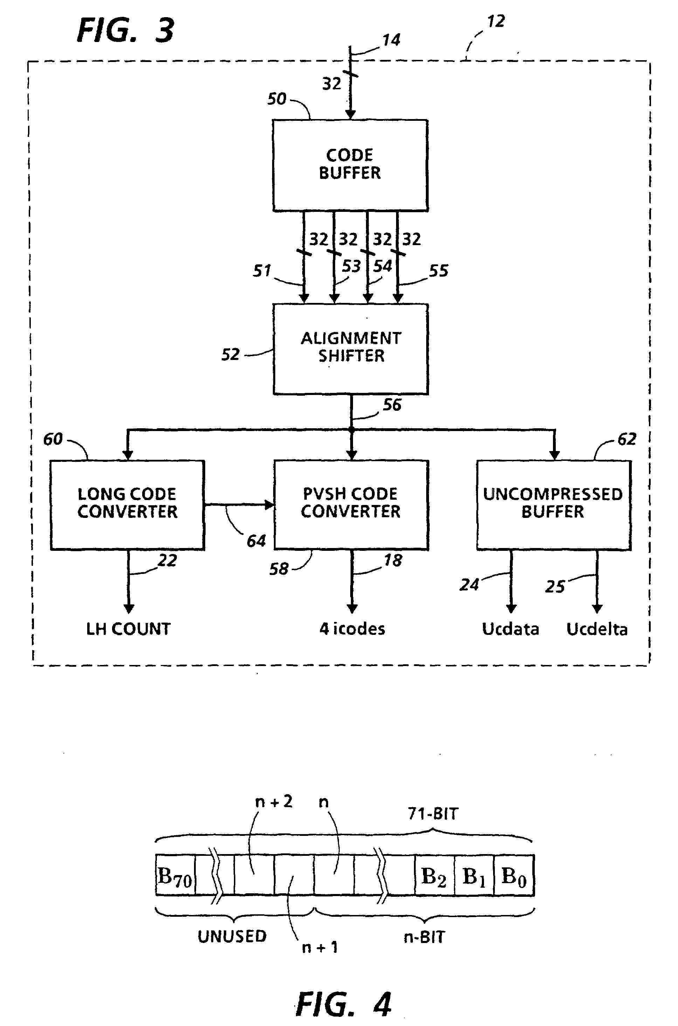

Referring to Figure 3, there is shown a detailed block diagram of the code identify and convert block 12. The code buffer 50 receives 32 bits of data at each clock cycle via line 14. The received data will be stored in a 32-bit wide and 4-bit deep code buffer 50. At each clock cycle, the code buffer 50 sends out four 32 bits of data to alignment shifter block 52 via lines 51, 53, 54 and 55. Alignment shifter block 52 receives the data and sends out 30 bits of data via line 56 to PVSH code converter 58, long code converter 60 and uncompressed buffer 62. The alignment shifter 52 is 71-bit wide and 4-bit deep. The alignment shifter block 52 sends out the first 30 bits without shifting. The reason for sending out 30 bits of data is that the maximum possible number of bits of four codes is 30 bits. For example, there might be three codes with 7 bits and a code with 9 bits in which the total number of bits will be 30 bits. Therefore, depending on the number of bits on each code, four codes may have less than 30 bits.

Since at each clock cycle, the four consecutive codes under decompression can have 30 bits or less, the alignment and shifter block 52 has to keep track of unused bits and shift the unused bits to align them with the incoming data. Referring to Figure 4, there is shown one row of the alignment shifter 52. Each register in the alignment shifter 52 has 71 bits B0-B70. At each cycle, if n-bits are used, then the alignment and shifter block 52 shifts the n+1 bit into B0 and all the unused bits after n+1 into the bits following B0. Depending on the number of bits used at each clock cycle, the alignment and shifter block 52 takes in a new set of bits from the code buffer 50. The number of bits in the new set of bits is equal to the number of bits which were used in the previous clock cycle. Since lines 51, 53, 54 and 55 each is a 32 bit bus therefore, at each clock cycle, the alignment and shifter block 52 takes in the new set of bits either from one bus or from two consecutive bus in which one carries the following 32 bits of the other bus.

Referring back to Figure 3, the PVSH code converter 58 converts the PVSH codes into fixed length PVSH intermediate codes and sends them to the parallel decoders 16 (Figure 1) via line 18. The long code converter 60 generates a LHcount for a long horizontal code and sends it to the long code decoder 20 via line 22 while sending a signal to the PVSH code converter via line 64 to inform the PVSH code converter that there is a long horizontal code and therefore, the PVSH code converter should send a ignore intermediate code to the parallel decoders 16 (Figure 1).

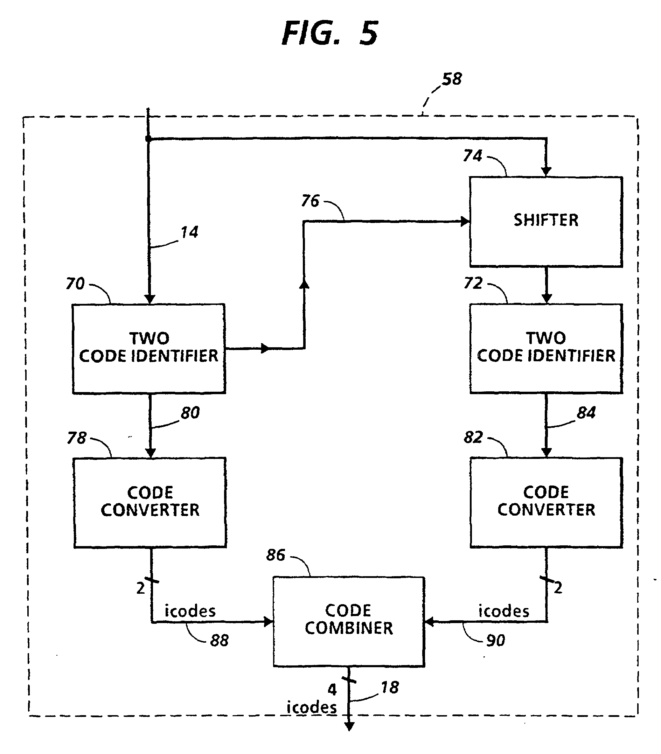

Referring to Figure 5, there is shown a detailed block diagram of the PVSH code converter 58. The PVSH code converter 58 has to identify four codes at each clock cycle. In this invention, a two code identifier lookup table has been generated which has all the different combinations of two codes one after the other. Therefore, by matching the bits from the incoming codes to one of these combinations, in one attempt, two codes will be identified.

The PVSH code converter 58, has two blocks 70 and 72. Each one of the blocks 70 and 72 is a two code identifier lookup table. The two code identifier block 70 finds the first two codes and sends out the total number of bits of those two codes to shifter 74 via line 76. Shifter 74 shifts the 30 bits received from the alignment and shifter 52 (Figure 3) by the total number of the bits from the first two codes. Then the shifted data will be sent to two code identifier 72 where the third and fourth codes are identified. The first two codes from two code identifier 70 will be sent to the code converter 78 via line 80 and the two codes from two code identifier 72 will be sent to code converter 82 via line 84. The code converter blocks 78 and 82 each convert the two identified codes into two fixed length intermediate codes. As a result, two intermediate codes icodeA and icodeB will be sent from code converter 78 to code combine 86 via line 88 and the two intermediate codes icodeC and icodeD will be sent from code converter 82 to the code combine 86 via line 90. All together 4 intermediate codes icodeA, icodeB, icodeC and icodeD will be sent out from the code combine 86 via line 18.

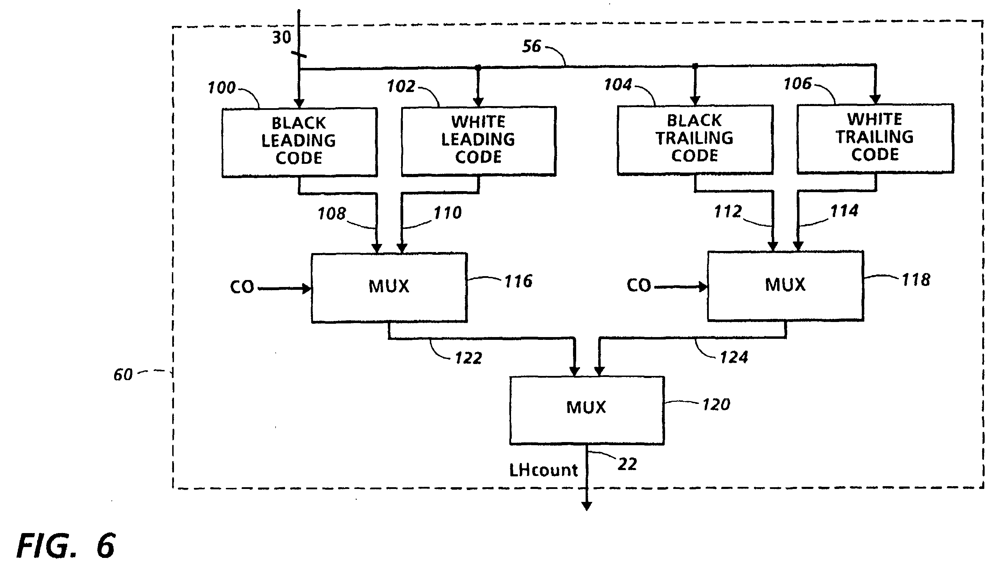

Referring to Figure 6, there is shown a detailed block diagram of a long code converter 60 (Figure 3). The long code converter block 60 receives 30 bits of data from the alignment and shifter block 52 (Figure 3). The long code converter block 60 has two lookup tables 100 and 102 one for white leading codes and one for the black leading codes and two lookup tables 104 and 106 one for white trailing codes and one for the black trailing codes respectively.

The 30 bits data will be sent from alignment and shifter block 52 to blocks 100, 102, 104 and 106 via line 56. Each one of blocks 100 and 102 finds a leading code and sends out a count for that leading code. Also, each one of blocks 104 and 106 finds a trailing code and sends out a count for that code. Block 100, 102, 104 and 106 send out the counts on lines 108, 110, 112 and 114 respectively. Depending on the color of the code, MUX (multiplexer) 116 will select one of the counts 108 or 110 for the leading code and MUX 118 will select one of the counts 112 or 114 for the trailing code. The count for the leading code will be sent to the MUX 120 via line 122 and the count for the trailing code will be sent to MUX 120 via line 124. MUX 120, sends the LHcount (long horizontal count) via line 22 to long code decoder 20 (Figure 1).

Referring back to Figure 3, the uncompressed data buffer 62 is used to store the uncompressed data in between the codes. The uncompressed buffer 62 holds the uncompressed data Ucdata 24 and its count Ucdelta 25 and sends them to data expand block 26 at the appropriate time.

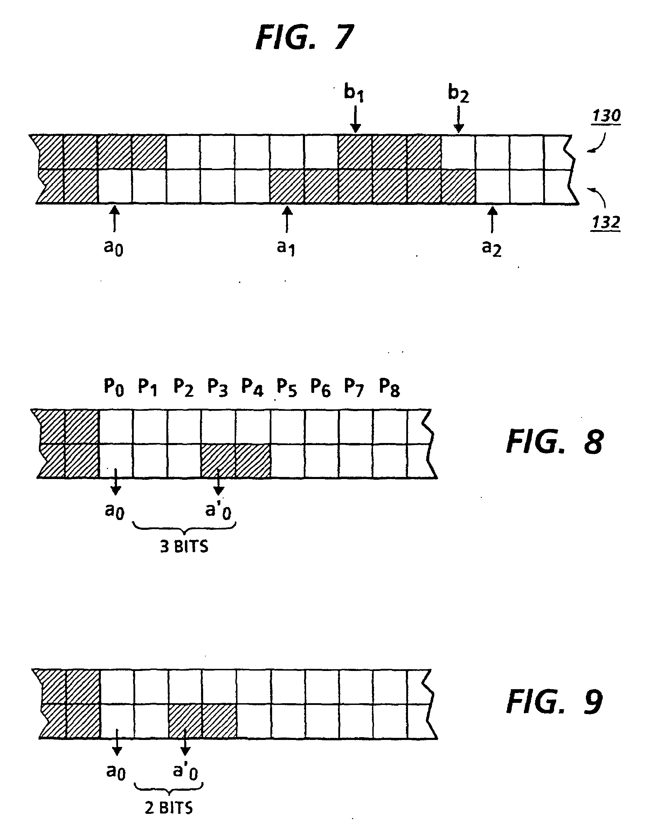

In order to comprehend the encoder of this invention, it is necessary to study the conventions used in CCITT algorithm. Referring to Figure 7, there is shown a portion of previous line data 130 and a corresponding portion of current line data 132. On the current line 132, a0 represents the starting position of encoding. At the start of the line, a0 is set on an imaginary white position situated just before the first element on the current line. During coding of the current line 132, the position of a0 is defined by the previous coding mode. On the current line 132, a1 represents the next change of color to the right of a0 and opposite color to a0. Also a2 represents the next change of color to the right of a1. On the previous line 130, b1 represents the first change of color to the right of a0 and of opposite color to a0 and b2 represents the next change of color to the right of b1.

In addition, in this invention, a bit assignment is given to the bits on the previous line data. The bit assignment of the previous line is based on the starting position a0. Referring to Figure 8, P0 is a bit on the previous line which has the same position as a0 (right above a0) and P1, P2, P3, P4, P5, P6, P7 and P8 are the consecutive bits following bit P0 and to the right of P0.

The parallel decoders 16 (Figure 1) have to decode four codes in parallel. Since the length of decompressed data from each code is not known, parallel decoding becomes complicated. For example, referring to Figure 8, there is shown an example of a code which generates three bits of decompressed data. In this example, the a0 is starting position for the code which has generated 3 bits of decompressed data. The starting position for the following code a0' will be three positions after a0. However, referring to Figure 9, if the first code generates two bits of data, then the starting position a0' of the following code will be two bits away from a0. Not knowing the number of the decompressed bits from each code creates a problem for selecting the starting position for the following codes.

In this invention, different possibilities has been considered. The parallel decoders 16 (Figure 1) receive icodeA, icodeB, icodeC and icodeD. IcodeA can either generate four bits or more, three bits, two bits or one bit of decompressed data. If icodeA generates four bits or more, then the decompressed data from icodeA will be selected and the decompressed data from the following intermediate code or codes will be ignored in the current clock cycle. The ignored intermediate codes will be decompressed on the following clock cycle or clock cycles. However, if icodeA generates less than four bits of decompressed data, three possible conditions exists. IcodeA may generate one bit in which case the starting position for the following code will be one position after a0. IcodeA may generate two bits of data in which case the starting position for icodeB will be two bits away from a0. Finally, icodeA may generate three bits of data in which case the starting position for icodeB will be three bits away from a0. In order to have the results ready for every condition, icodeB will be decoded assuming three different starting positions.

The combined decompressed data from both icodeA and icodeB can also be less than four bits. In this case, the decompressed data from icodeA and icodeB should be combined with the decompressed data from the following code icodeC. If the combination of icodeA and icodeB generate less than four bits of data, there are only two possibilities. Either they have generated two bits or three bits of decompressed data. Therefore, the starting position for icodeC is either two bits away from a0 or three bits away from a0. In order to have the results ready for every condition, icodeC will be decoded assuming two different starting positions.

Finally, if the combined decompressed data from icodeA, icodeB and icodeC generate less than four bits of decompressed data, then they must have generated three bits of data. In this case the decompressed data from icodeA, icodeB and icodeC will be combined with the decompressed data of icodeD. Therefore, decoder D has a starting position three bits away from a0.

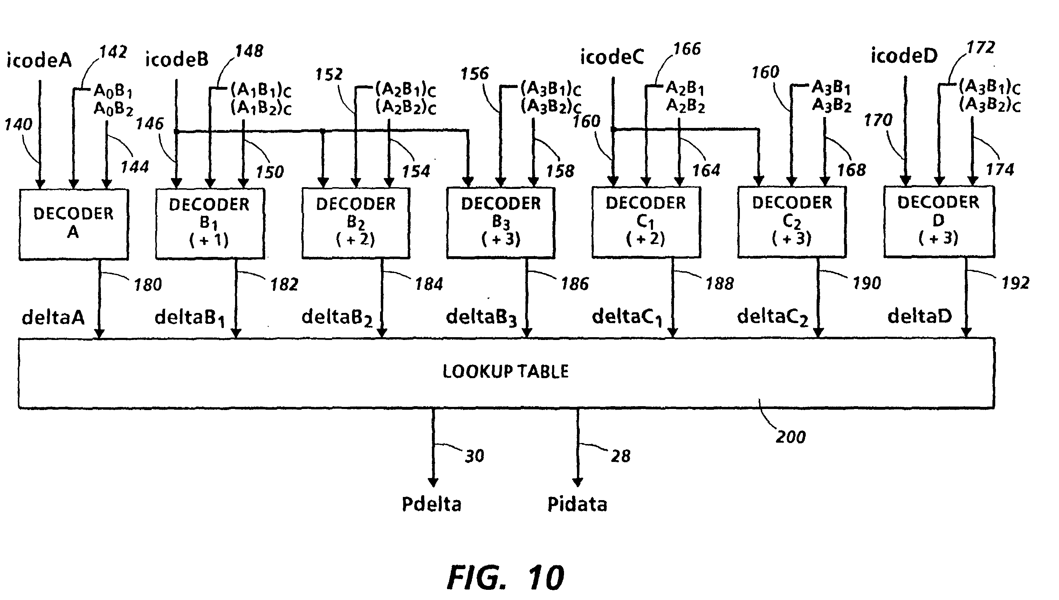

Referring to Figure 10, there is shown a detailed block diagram of the parallel decoder 16 of Figure 1. The parallel decoder 16, has seven decoders A, B1, B2, B3, C1, C2 and D. Among the seven decoders, there is one decoder A for icodeA. There are three decoders B1, B2 and 83 for icodeB and two decoders C1 and C2 for icodeC and one decoder for icodeD. Decoder B1 assumes that icodeA has generated only one decompressed data, decoder B2 assumes that icodeA has generated two bits of decompressed data and decoder B3 assumes that icodeA has generated three bits of decompressed data. Decoder C1 assumes that icodeA and icodeB together have generated only two bits of data and decoder C2 assumes that icodeA and icodeB together have generated three bits of decompressed data. Finally, decoder D assumes that icodeA, icodeB and icodeC together have generated three bits of decompressed data.

It should be noted that hereinafter the term "decoder B" shall mean one of the decoders B1, B2 or 83 and the term "decoder C" shall mean one of the decoders C1 or C2.

In operation, icodeA is decompressed regardless of the other intermediate codes. However, icodeB, icodeC and icodeD will be decoded in parallel with icodeA for every possible condition between the four intermediate codes. Once the icodeA is decoded, the result for all the possible conditions between the four codes are ready and depending on the number of decompressed data being generated by icodeA, a proper combination of the decompressed data will be selected to assure a minimum of four bits of decompressed data are being generated at each clock cycle.

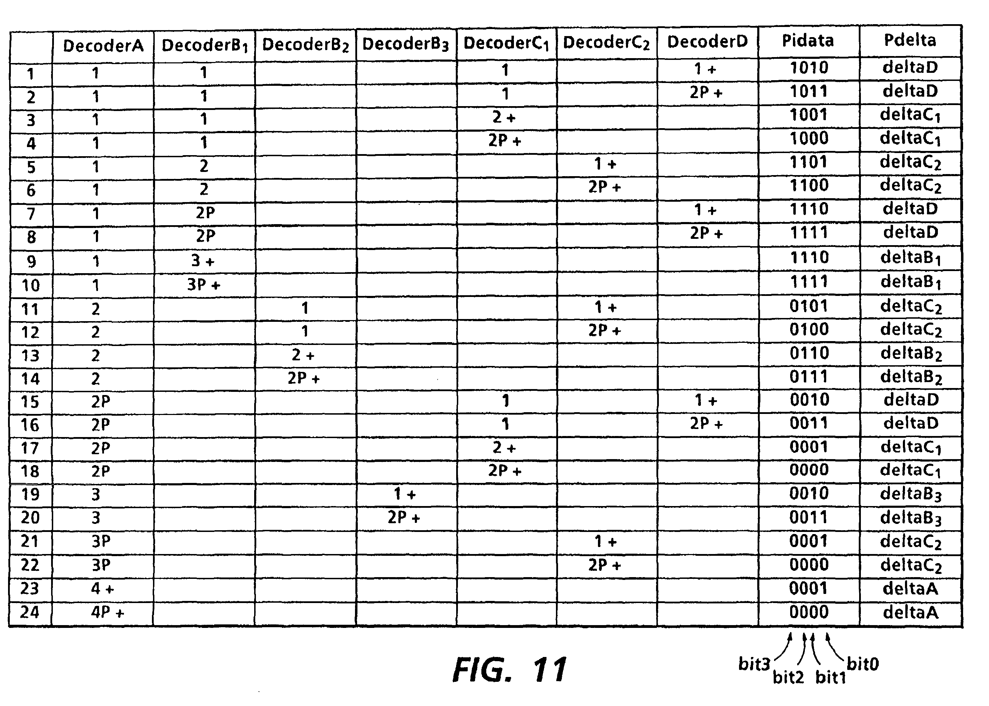

Referring to Figure 11, there is shown a table of all the possible conditions between the four codes. In this table, each column represents the length of the decompressed data of each decoder. For example, condition 23 shows that decoder A has generated 4 bits or more decompressed data. In this condition, the output from decoders B, C and D will be ignored and the decompressed data from decoder A will be sent out The ignored intermediate codes from decoders B, C and D will be decompressed on the following clock cycle or clock cycles.

As another example, condition 19 shows that decoder A has generated 3 bits of data. In this condition, the result from decoder A has to be combined with the result from decoder B3 since the starting position of decoder B3 is 3 bits away from the starting position of decoder A. In Figure 11, the + sign represents that the uncompressed data may have more bits than the number shown in the table. In condition 19, the result from decoder 83 might have one bit or more. Therefore, if it is combined with the result from decoder A, the combined result will be four or more bits of decompressed data.

As another example, condition 11 shows that the result from decoder A is 2 bits and therefore it should be combined with result from decoder B2 which has its starting position two bits away from the staring position of decoder A. However, since the result from decoder B2 is only one bit, the combined results from decoder A and decoder B2 will be three bits. Therefore, the combined result from decoder A and decoder B2 should be combined with the result of decoder C2 which has its starting position three bits away from the stating position of decoder A.

In the table of Figure 11, P represents a pass code and Pdelta represents the total number of combined decompressed bits in each clock cycle. The function of P and Pdelta in this table will be described in a greater detail hereinafter.

Referring back to Figure 10, the parallel decoders receive the icodes and they generate an intermediate data and a count for the length of the decompressed data. In order to decode a code, the decoder has to have the a0b1 and a0b2 for each code. Since the length of each code is not known, finding a0b1 and a0b2 for icodeB, icodeC and icodeD is not possible except by the aforementioned assumptions. Therefore, the a0b1 and a0b2 for each code can be determined for every different possibility.

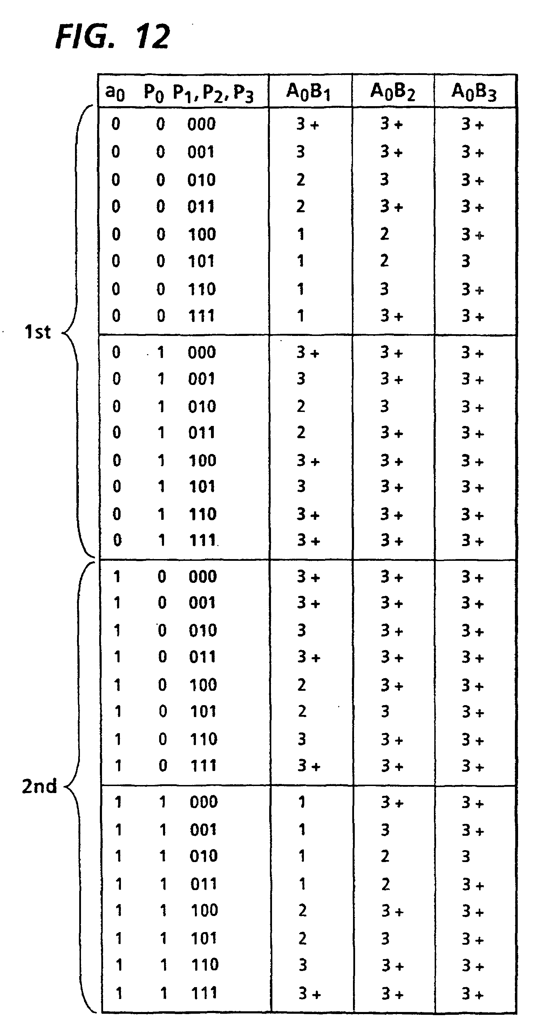

For example, referring to Figure 12, there is shown a simplified table which shows different possibilities of four bits P0, P1, P2 and P3 from the previous line with respect to the starting position a0. In the 1st portion of Figure 12, a0 is 0 and the four bits P0, P1, P2 and P3 from the previous line are changed. As it can be observed, there are 16 different possibilities between P0, P1, P2 and P3. Since a0 is 0, the a0b1 and a0b2 are known for each condition. In the 2nd portion, a0 is 1 and the four bits P0, P1, P2 and P3 from the previous line are changing. The two different portions of this table provide all the possible combinations between a0, P0, P1, P2 and P3. Therefore, by having a0, P0, P1, P2 and P3 and finding a match for them, the a0b1 and a0b2 for that condition can be defined.

It should be noted that for the purpose of simplicity and clarification, this table is prepared for four bits P0, P1, P2 and P3 of the previous line. However, since the disclosed embodiment of this invention requires 9 bits of pervious line data at each clock cycle, the table on Figure 12 has to be expanded by well known methods to provide all the possibilities between P0, P1, P2, P3, P4, P5, P6, P7 and P8. By expanding the table to 9 bits of previous line data each portion of table will have 512 conditions.

Referring to Figure 1, the expanded table of Figure 11 is stored in the previous line processor 38. By having all the possibilities available, a0b1 and a0b2 for different decoders can be provided. However, it should be noted that for different decoders, the starting position is different and the bit assignment of the previous line data is based on the starting position of each decoder. Since the starting position for different decoders is different, a generic term AXB1 is assigned to a0b1 and a generic term AXB2 is assigned to a0b2.

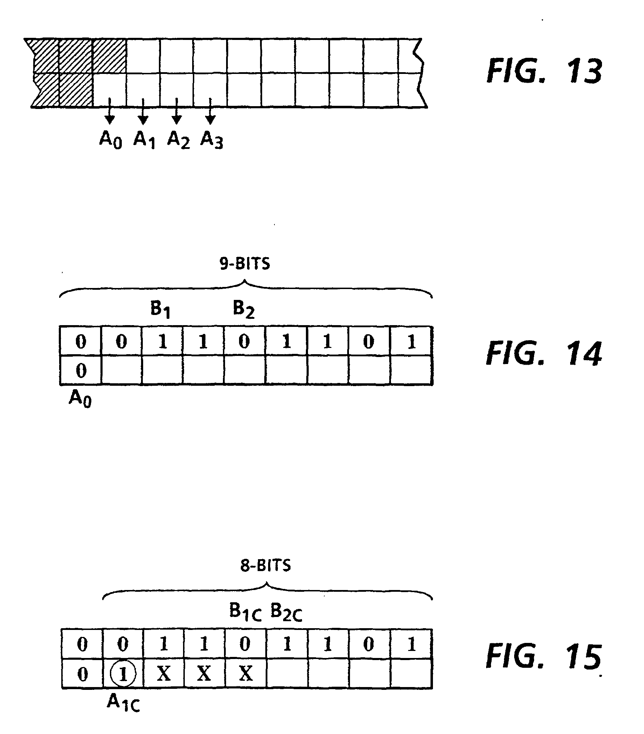

Each decoding unit receives an icode and a corresponding (AXB1) and (AXB2) or (AXB1)C and (AXB2)C value. The AX denotes the starting position of each decoder in the current line. Referring to Figure 13, the position of AX for different decoders is as follows: A0 for decoder A, A1 for decoder B1, A2 for decoder B2, A3 for decoder B3, A2 for decoder C2, A3 for decoder C3, A3 for decoder D. A1 is one bit after A0, A2 is two bits after A0 and A3 is three bits after A0.

It should be noted that the notation of A1, which is the starting position for encoder B, is different than a1 from the CCITT standard notations, where a1 is the next change of color in the current line. However, B1 and B2 are the same as b1 and b2 of the CCITT standards respectively.

AXB1 is defined as the distance between the starting position and the first change of color in the previous line and AXB2 is defined as the distance between the starting position and the second change of color on the previous line. (AXB1)C and (AXB2)C are the same as AXB1 and AXB2 with the exception of the color. For the (AXB1)C and (AXB2)C, the starting position has the opposite color to the starting position of AXB1 and AXB2.

Referring to Figures 14 - 19, there are shown the relationship between the starting position for each encoder and the color change on the previous line. Referring to Figure 14, A0 is the starting position for encoder A and depending on if the color of that bit is white (0), a color change from 0 to 1 to the right of A0 on the previous line will define B1 and a color change from 1 to 0 to the right of B1 on the previous line will define B2. However, if the color of A0 is black (1), a color change from 1 to 0 to the right of A0 will define B1 on the previous line and a color change from 0 to 1 to the right of B1 on the previous line will define B2. In the example of Figure 14, the color of A0 is white (0). As it can be observed, decoder A will use 9 bits of previous line data.

Referring to Figure 15, A1 is the starting position for the decoder B1. The result from decoder B1 will be used only when the decoder A generates one bit of data. Therefore, decoder B1 decodes the incoming intermediate code assuming that-the starting position is one bit after A0 and since every code except the pass code causes a change of color, the A1C will have a color opposite to the color of A0. The condition for the pass code will be described hereinafter. It should be noted that A1C, A2C, A3C are the same as AX in (AXB1)C or in (AXB2)C

In the example of Figure 15, the color of A1C is black (1). The reason 1 is circled is to distinguish that A1C is an assumption. If decoder A generates one bit, then this assumption must be correct. As it can be observed, decoder B1 will use 8 bits of previous line data.

It should be noted that in the description of Figure 15 - 19, the condition for pass code is not discussed since the pass code needs a separate discussion which will be described in greater detail once the function of the decoders A, B, C and D are described in detail.

It should also be noted that in Figures 15 - 19, the X denotes that the value of the bit is not known.

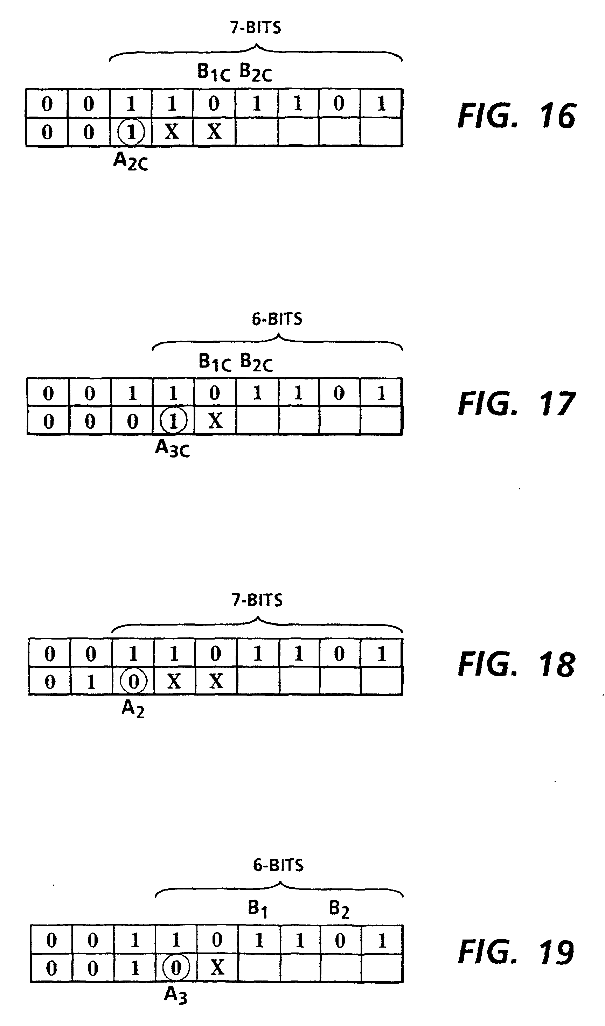

Referring to Figure 16, A2C is the starting position for the decoder 82. The result from decoder B2 will be used only when the decoder A generates two bits of data. Therefore, decoder B2 decodes the incoming intermediate code assuming that the starting position is two bits after A0 and since every code except the pass code causes a change of color, the A2C will have a color opposite to the color of A0. In the example of Figure 16, the color of A2C is black (1). The reason 1 is circled is to distinguish that A2C is an assumption. If decoder A generates two bits, then this assumption must be correct. As it can be observed, decoder B2 will use 7 bits of previous line data.

Referring to Figure 17, A3C is the starting position for the decoder B3. The result from decoder B3 will be used only when the decoder A generates three bits of data. Therefore, decoder B3 decodes the incoming intermediate code assuming that the starting position is three bits after A0 and since every code except the pass code causes a change of color, the A3C will have a color opposite to the color of A0. In the example of Figure 17, the color of A1C is black (1). The reason 1 is circled is to distinguish that A3C is an assumption. If decoder A generates two bits, then this assumption must be correct. As it can be observed, decoder B3 will use 6 bits of previous line data.

Referring to Figure 18, A2 is the starting position for the decoder C1. The result from decoder C1 will be used only when the decoder A together with decoder B generate two bits of data. Therefore, decoder C1 decodes the incoming intermediate code assuming that the starting position is two bits after A0 and since every code except the pass code causes a change of color and since decoders A and B have decoded two codes, A2 will have a color the same as A0. In the example of Figure 18, the color of A2 is white (0). The reason 0 is circled is to distinguish that A2 is an assumption. If decoders A and B generate two bits, then this assumption must be correct. As it can be observed, decoder C1 will use 7 bits of previous line data.

Referring to Figure 19, A3 is the starting position for the decoder C2. The result from decoder C2 will be used only when the decoder A together with decoder B generate three bits of data. Therefore, decoder C2 decodes the incoming intermediate code assuming that the starting position is three bits after A0 and since every code except the pass code causes a change of color and since decoders A and B have decoded two codes, A3 will have a color the same as A0. In the example of Figure 19, the color of A3 is white (0). The reason 0 is circled is to distinguish that A3 is an assumption. If decoders A and B generate three bits, then this assumption must be correct. As it can be observed, decoder C1 will use only 2 bits of current line data and only 6 bits of previous line data.

Referring back to Figure 17, decoder D uses A3C. The result from decoder D will be used only when the decoder A together with decoders B and C generate three bits of data. Therefore, decoder D decodes the incoming intermediate code assuming that the starting position is three bits after A0 and since every code except the pass code causes a change of color and since decoders A and B and C have decoded three codes, A3 will have a color opposite to the color of A0. Therefore, the starting position of decoder D is black (1) as in Figure 17. Decoder D will use only 2 bits of current line data and only 5 bits of previous line data.

Once the AxB1, AXB2, (AXB1)C and (AXB2)C are defined for each different possibility, then the length of each code can be defined. For the pass code, the length of the decompressed data is equal to AXB2 or (AXB2)C. For the vertical code, the length of the decompressed data is equal to the AXB1 plus the two least significant bits of the intermediate code or (AXB1)C plus the two least significant bits of the intermediate code. Finally, for the short horizontal leading code, the length of the decompressed data is equal to the three least significant bits of the intermediate short horizontal leading code and for the short horizontal trailing code, the length of the decompressed data is equal to the three least significant bits of the intermediate short horizontal trailing code.

Therefore, by having either the AXB1, AXB2, (AXB1)C and (AXB2)C or the three least significant bits from the intermediate codes, one can provide the length of decompressed data for each PVSH intermediate code.

Referring back to Figure 10, depending on the starting position of each decoder, a proper AXB1, AXB2, (AXB1)C and (AXB2)C will be sent to each decoder. Decoder A receives the intermediate code icodeA 140 from the code identify and convert block 12 (Figure 1), A0B1 142 and A0B2 144 from the previous line processor 38 (Figure 1). Decoder A generates a length of decompressed data for the intermediate code icodeA and sends it out on deltaA.

Decoder B1, B2 and B3 receive icodeB 146 from the code identify and convert block 12 (Figure 1) and (AXB1)C and (AXB2)C from the previous line processor 38 (Figure 1). The reason decoders B receive the opposite color (AXB1) and (AXB2) is that decoders B1, B2 and B3 will be used once decoder A decodes a code which means there has been a color change and therefor the next code should be decoded by an opposite color to the color of icodeA. Decoder B1 receives (A1B1)C 148 and (A1B2)C 150. Decoder B1 generates a length of decompressed data for the icodeB and adds 1 to the length of data of icodeB and sends the result on deltaB1. The reason for adding one to the length of the data from icodeB is that the result from decoder B1 will be used only when the decoder A has generated one bit. Therefore, by adding one, the total number of decompressed data generated by the decoders A and B1 will be sent on deltaB1.

Decoder B2 receives (A2B1)C 152 and (A2B2)C 154. Decoder B2 generates a length of decompressed data for the icodeB and adds 2 to the length of decompressed data for icodeB and sends the result on deltaB2. The reason for adding two to the length of the decompressed data from icodeB is that the result from decoder B2 will be used only when the decoder A has generated two bits. Therefore, by adding two, the total number of decompressed data generated by the decoders A and B2 will be sent on deltaB2.

Decoder B3 receives (A3B1)C 156 and (A3B2)C 158. Decoder B3 generates a length of decompressed data for the icodeB and adds 3 to the length of decompressed data for icodeB and sends the result on deltaB3. The reason for adding three to the length of the decompressed data from icodeB is that the result from decoder B2 will be used only when the decoder A has generated three bits. Therefore, by adding three, the total number of decompressed data generated by the decoders A and B2 will be sent on deltaB3.

Decoder C1 and C2 receive icodeC 160 from the code identify and convert block 12 (Figure 1) and AXB1 and AXB2 from the previous line processor 38 (Figure 1). The reason the decoders C1 and C2 receive AXB1 and AXB2 without a color change with respect to the color of icodeA is that decoders C1 and C2 will be used once decoders A and B decode two codes which means there has been two color changes one from A0 to the opposite of A0 and one from the opposite of A0 back to A0 and therefor the next code should be decoded by the same color as the color of A0. Decoder C1 receives A2B1 162 and A2B2 164. Decoder C1 generates a length of decompressed data for the icodeC and adds 2 to the length of decompressed data for icodeC and sends the result on deltaC1. The reason for adding two to the length of the decompressed data from icodeC is that the result from decoder C1 will be used only when the decoder A and B together generate two bits of data. Therefore, by adding two, the total number of decompressed data generated by the decoders A, B and C1 will be sent on deltaC1.

Decoder C2 receives A3B1 166 and A3B2 168. Decoder C2 generates a length of data for the icodeC and adds 3 to the length of decompressed data for icodeC and sends the result on deltaC2. The reason for adding three to the length of the decompressed data from icodeC is that the result from decoder B2 will be used only when the decoder A and B together generate two bits of data. Therefore, by adding two, the total number of decompressed data generated by the decoders A, B and C2 will be sent on deltaC2.

Decoder D receive icodeD 170 from the code identify and convert block 12 (Figure 1) and (AXB1)C and (AXB2)C from the previous line processor 38 (Figure 1). The reason the decoder D receives the opposite color (AXB1) and (AXB2) is that decoder D3 will be used once decoders A, B and C decode three codes which means there have been three color changes from A0 to the opposite of A0, then from opposite of A0 back to A0 and from A0 to the opposite of A0. Therefore, icodeD has to-be decoded by the opposite color to the color of A0. Decoder D generates a length of decompressed data for the icodeD and adds 3 to the length decompressed data for icodeD and sends the result on deltaD. The reason for adding three to the length of the decompressed data from icodeD is that the result from decoder D will be used only when the decoders A, B and C together generated three bits of decompressed data. Therefore, by adding one, the total number of decompressed data generated by the decoders A, B and C will be sent on deltaD.

Referring back to Figure 3, when the PVSH code converter 58 receives a pass code, it will convert the pass code into intermediate code and will send out a dummy intermediate code following the intermediate code for the pass code. The code right after the pass code will be converted to an intermediate code and it will be sent out after the dummy intermediate code. Therefore, once the intermediate codes are sent to the parallel decoders 16, the intermediate code for the pass code and intermediate code of the following code to the pass code will always have a dummy intermediate code in between.

Referring to Figure 10, the reason for sending a dummy intermediate code followed by and intermediate code for the pass code is that a pass code does not cause a color change and therefore, the code following a pass code will have the same color as the color of the pass code. As a result, a pass code and its following code should not be decoded by two consecutive decoders.

For example, if icodeA is an intermediate code for a pass code, then the intermediate code of the code which follows the pass code should not be decoded by decoder B since decoder B assumes a change of color. Since in this invention, a dummy code which will be ignored is inserted between the intermediate code of a pass code and the intermediate code of the code following the pass code, the dummy code will go to the decoder B and the intermediate code for the code following the pass code will go to the decoder C. The result from decoder B which received a dummy code will be ignored and the result from decoder A will be combined with the result from decoder C which received the intermediate code for the code following the pass code. Since decoder C has a color assumption which is the same as the color of the starting position of decoder A, combining the result from decoder A with decoder C provide the correct decoding for a pass code and its following code.

It should be noted that pass code can not generate one bit. The minimum number of bits of a decompressed data from a pass code is two bits. Therefore, not using the decoder B will not cause a problem.

As another example, if icodeB happens to be the intermediate code for a pass code, then decoder B will receive icodeB, decoder C will receive a dummy intermediate code and decoder D will receive the intermediate code for the code following the pass code. The result from decoder C which received a dummy code will be ignored and the result from decoder B will be combined with result from decoder D which received the intermediate code for the code following the pass code. Since decoder D has a color assumption which is the same as the color of the starting position of decoder B, combining the result from decoder B with decoder D provide the correct decoding for a pass code and its following code. Again since a pass code can not generate one bit of decompressed data, not using decoder C will not generate a problem.

Referring back to Figure 11, it should be noted that every time there is a pass code, the result from that decoder will be combined with the result from a decoder which is the second following decoder. For example, in condition 17, icodeA is an intermediate code of a pass code which generates two bits of data. In this condition, the result from decoder A will be combined with result from decoder C1. However, in condition 7, the icodeA generates 1 bit of decompressed data and therefore it has to be combined with the result form decoder B1. In this condition, the icodeB happens to be an intermediate code for a pass code which generates two bits of decompressed data. Therefore, the result from decoder A and decoder B1 have to be combined with the result from decoder D rather than decoder C2 since decoder D has the same color assumption on its starting position as the color of the starting position of decoder B3,

Also, in Figure 11, Pdelta is the total number of bits of decompressed data generated in that clock cycle. As it can be observed, Pdelta is taken from the last decoder that its result is combined with the result from the previous decoders. For example, in condition 5 the result from decoders A and B1 are combined with the result from decoder C2. Therefore, delta is taken from decoder C2. As another example, in condition 16, the result from decoders A and C1 should be combined with the result from decoder D and therefore delta is taken from decoder D. Yet as another example, in condition 23 since the result from decoder A has 4 or more bits, it will be sent out without combining it with the result from any decoder. In this condition 23, delta is taken from decoder A.

Referring back to Figure 10, deltaA 180, deltaB1 182, deltaB2 184, deltaB3 186, deltaC1 188, deltaC2 190 and deltaD 192 are all sent to look up table 200. It should be noted that along with each delta, the color of that code will also be sent out. However, for the purpose of simplicity, only delta from each decoder is shown. Lookup table 200 contains the data of Figure 11. Based on different conditions between the delta from different decoders, the lookup table 200 selects a proper Pdelta and a proper Pidata. The lookup table 200 sends the Pdelta via line 30 and the Pidata via line 28 to data expand block 26 (Figure 1).

Referring back to Figure 1, the data expand block 26 which receives the Pdelta 30 and Pidata 28 from the parallel decoders 16 and the LHdelta 34 and LHidata 32 from the long code decoder 20 has to expand the intermediate data based on the received delta (count of the decompressed data) in order to generate the decompressed data.

In order to understand the expansion of the intermediate data it is necessary to study the generation of the intermediate data.

Referring back to Figure 11, the intermediate data for PVSH codes has been generated based on different conditions. The intermediate data has a fixed length of 4 bits (bit0, bit1, bit2 and bit3) and it has to be expanded to generate the decompressed data. The intermediate data is based on the number of the bits from each decoder and the color change. For example, in condition 13, the result from decoder A is 2 bits and the result from decoder B2 is also 2 bits. In this condition, bit3 and bit2 of the intermediate data represent the 2 bits from decoder A and therefore bit 3 shows a 0 and bit2 shows a color change from 0 to 1 on the second bit. Bit1 and bit0 represent two bits generated by decoder B2. Bit1 shows the same color (1) carried through the next data and bit 0 shows the end of the data which shows a color change (0).

In Figure 11, P represents a pass code and + represents more than. Therefore, in condition 13, if decoder B2 generates more than 2 bits of data, the intermediate data will be the same as intermediate data shown for condition 13 however, when it is expanded, it will contain the more bits of uncompressed data. In condition 13, if decoder B2 generates 2 bits of data, the intermediate data will not be expanded since the intermediate data contains the correct decompressed data. However, if the decoder B2 generates more than two bits of data, then the intermediate data need to be expanded. The expansion is always done on bit1. For example, in condition 13 if decoder B2 generates 5 bits, then bit1 has to be repeated three times to generate the uncompressed data.

The intermediate data contains the correct uncompressed data for the result from different decoders that are used except the result from the last decoder used in the combination of decoders A, B, C and D. For the purpose of simplicity hereinafter the last decoder in the combination of decoders A, B, C and D will be called "last decoder". The result from the last decoder is compressed and it needs to be expanded. To expand the result from the last decoder, it is sufficient to repeat bit 1 by (Pdelta - 4). Pdelta is the total number of decompressed data for that clock cycle and number 4 is the number of bits that the intermediate data has.

Therefore, in condition 13, if decoder 82 generates 5 bits, then the Pdelta from deltaB2 will be 7. Then Pdelta - 4 = 7 - 4 which is 3. Then bit 1 will be repeated three times and therefore, after expansion, the uncompressed data will be 0111110. It should be noted that bit 1 will be repeated and they will be inserted between bit 1 and bit 0 (011-111-0).

As another example, in condition 21, the result from decoder A is 3P which means that the code is a pass code and has generated 3 bits. This result should be combined with the result from decoder C2 which has generated 1 bit or more. The intermediate data for this condition is 0001. Bit3, bit2 and bit1 show a data of 3 bits and since this data is from a pass code, there will be no color change on bit1. Decoder C1 has generated 1 bit and that will be shown by bit 0 which shows a color change from 0 to 1. This intermediate data does not need to be expanded. However, if decoder C2 generates more than one bit data, then the intermediate data needs to be expanded. For example, if in condition 21, decoder C2 generates 2 bits, then the intermediate data has to be expanded by Pdelta - 4 = (5 - 4=1). Then the decompressed data will be 00001 (000-0-1.

It should be noted that the table in Figure 11 is based on a0 being white (0). However, if the a0 is black, the intermediate data will be inverted.

Furthermore, depending on the terminating color of the intermediate data on each clock cycle, the color of the intermediate code may be inverted on the following clock cycle. For example, if on the first clock cycle, in which the color of a0 is assumed to be white (0), condition 7 exists, the terminating color on the intermediate code is 0. It should be noted that the terminating color is the color of bit 0. On the second clock cycle, if a condition such as condition 5 occurs, then the intermediate data has to be inverted since the decompressed data has to start with the same color as the terminating color from the previous clock cycle. Therefore, in this example, on the second clock cycle, the intermediate data for condition 5 has to be inverted from 1101 to 0010. As a result, the intermediate data for the second clock cycle will be 0010.

As another example, if at a certain clock cycle, condition 14 exists and the intermediate data is kept as 0111, then if on the following clock cycle, condition 19 occurs, then the intermediate data for condition 19 has to be inverted from 0010 to 1101. Therefore, in this example, the intermediate code for the clock cycle following the certain clock cycle will be 1101.

Referring back to Figure 1, when there is a long horizontal code, the code identify and convert block 12 sends out a LHcount to the long code decoder 20. The long code decoder 20 divides the LHcount, received from MUX 126, by 8 and sends each division of the count on one clock cycle as LHdelta via line 34 and a proper intermediate data as LHidata via line 32 to the data expand block 26 until the LHcount is covered. The count on the last clock cycle covering the LHcount may be less than 8. For example, if the LHcount is 19, then the long code decoder 20 will send out a count of 8 on the first and second clock cycles and a count of 3 on the third clock cycle. These counts will be sent out on LHdelta 34 to the data expand block 26. The long code decoder 20 also generates a LHidata. The LHidata is a two bit intermediate data which needs to be expanded to provide the decompressed data for a long horizontal code.

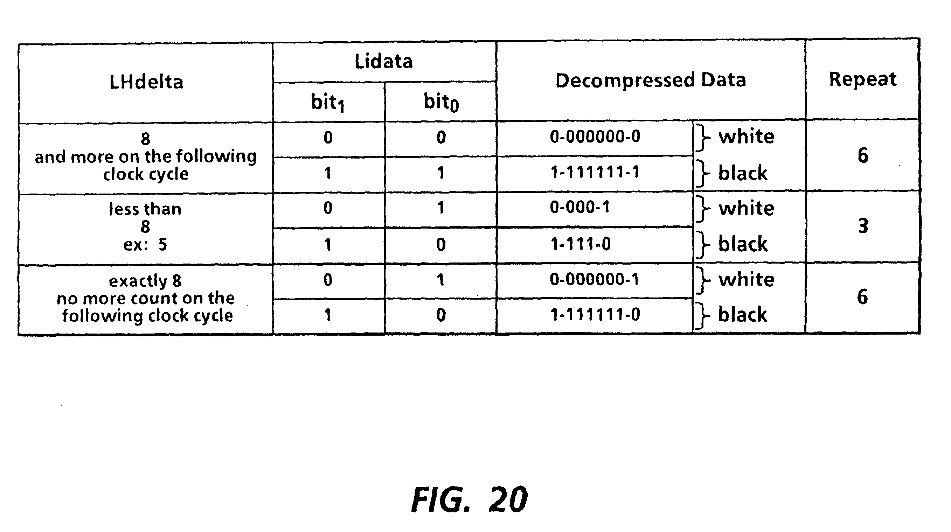

Referring to Figure 20, there is shown LHidata and the expanded LHidata (decompressed data) for different counts. If the LHdelta is 8 and the rest of the count will be sent on the following clock cycle, then for the clock cycle that 8 is sent out, the LHidata will be either 00 or 11 depending on if the data is white or black respectively. In this case, in order to expand the LHidata, bit 1 has to be repeated 6 times and inserted between bit 1 and bit 0 to generate 8 bits of decompressed data. When LHdelta is less than 8 bits, then on LHidata 01 or 10 will be sent out depending on if the color is white or black respectively. In this case, in order.to expand the LHidata, bit1 has to be repeated to generate the number of bits of the count. For example in Figure 20, the count less than 8 is selected to be 5. Therefore, bit 1 will be repeated three times (LHdelta-2 = 5-2 = 3) and it will be inserted between bit 1 and bit 0 in order to generate 5 bits of decompressed data.

Finally, if the LHdelta is exactly 8 which means that no more count will be sent out on the following clock cycle, then 01 or 10 will be sent out on bit 1 and bit 0 depending on if the data is white or black respectively. In this condition, in order to expand the LHidata, bit 1 has to be repeated 6 (LHdelta-2 = 8-2 = 6) times to generate an 8 bit decompressed data.

After the data expand block 26 expands the intermediate data from the parallel decoders or expands the intermediate data from the long code decoder, it will concatenate the decompressed data of each clock cycle to the decompressed data from the previous clock cycles and stores them until there are 32 bits of decompressed data and then it will send the 32 bits out as decompressed data.

It should be noted that when a long horizontal code is identified among the four codes received at each clock cycle, the intermediate PVSH codes prior to the long horizontal code will be sent to the parallel decoder 16 (Figure 1) and the long code and its following codes will be held till the next clock cycle. In this case, since the parallel decoders 16 receive less than four codes, they may generate less than four bits of decompressed data. Therefore, at this clock cycle less than four bits of decompressed data may be sent out. However, on the following clock cycle, since the first code is a long horizontal code, there will be more than four bits of decompressed data.

It should also be noted that when the identified long horizontal code is the first code among the four codes received at each clock cycle or a long horizontal code is held from a previous clock cycle to be decoded on the current clock cycle which will be the first code among the four codes received at the current clock cycle, the long horizontal code will be sent to the long horizontal code decoder 20 (Figure 1) and an ignore code will be sent to the parallel decoders 16 (Figure 1). Once the parallel decoders 16 receive the ignore code, they will be inactivated and only the long code decoder 20 will decode one long horizontal code since the decompressed data of a long horizontal code will be more than four bits of decompressed data. The codes following the long horizontal codes will be held until the next clock cycle to be decoded.

It should further be noted that when the parallel decoders 16 are active, the long code decoder 20 is inactive.

Referring back to Figure 1, the data expand block 26 also receives the uncompressed data Ucdata 24 and its count Ucdelta 25 from the code identify and convert block 12. Once the data expand block 26 receives the uncompressed data Ucdata 24, it will ignore the parallel decoders 16 and the long code decoder 20 and sends out the incoming uncompressed data unaltered. However, if there is an intermediate data from the parallel decoder, the data expand block selects the intermediate data of the parallel decoder and when there is a long code, the data expand selects the intermediate data from the long code decoder and when there is uncompressed data, it will select the uncompressed data.

Therefore, at any given clock cycle, either the parallel decoder 16 is active or the long code decoder 20 is active or the uncompressed data is being sent to the data expand block 26. It should be noted that when the uncompressed data is being sent to the data expand block 26, the parallel decoders 16 and the long code decoder 20 will be inactive.

Furthermore, if an uncompressed data is identified among the four codes received within one clock cycle, if the codes prior to the uncompressed data are PVSH codes they will be sent to the parallel decoders 16 and if they are long horizontal codes, they will be sent to the long horizontal code one at a time and the uncompressed data and its following codes will be held till the next clock cycle or clock cycles. Once the prior codes to the uncompressed data are decoded, then on the following clock cycle, the uncompressed data will be sent to the data expand block. During the clock cycle that the uncompressed data is being sent to the data expand block, the parallel decoders 16 and the long code decoder 20 will be inactive.

It should be noted that the data expand block receives the uncompressed data and concatenates the uncompressed data with the decompressed data from the previous clock cycles and stores the result until there are 32 bits of decompressed data available and then sends out the 32 bits of decompressed data.

The uncompressed data will also be sent to the previous line processor to be stored for decompressing the following line.

The disclosed embodiment of this innovation is capable of decompressing CCITT, IBMMR and TIFF codes at the rate of 100 400 Mbits/sec.

## Claims

1. A method for decompressing compressed image data comprising the steps of:
a) taking a series of a given number of at least three codes and in one clock cycle identifying them as long horizontal codes which generate greater than four bits of decompressed data, or non-long horizontal codes which generate four or less bits of decompressed data;
b) decoding in parallel, during one clock cycle, a non-long horizontal code series of one or more non-long horizontal codes with the decoding for each but the first code of the non-long horizontal code series being for all possible conditions of the number of bits that can be generated during the same one clock cycle by those codes in the non-long horizontal code series preceding a respective one of the codes of the non-long code series, the possible conditions being a minimum cumulative number of bits that can be generated by those codes in the non-long horizontal code series preceding a respective one of each but the first code of the non-long code series up to one bit less than a desired given minimum number of bits of decompressed data to be generated during one clock cycle;
c) selecting the decompressed data of the first code in the non-long horizontal code series if either the first code generates at least the desired given minimum number of bits of decompressed data or the first code is the only code in the non-long horizontal code series;
d) selecting the decompressed data of the first code in the non-long horizontal code series and the decompressed data for the second code in the non-long horizontal code series, which corresponds to the possible decompressed data condition that matches the actual number of bits generated by the decompressed data of the first code, if the number of bits of decompressed data generated by the first code is less than the desired given minimum number of bits and either the first two codes generate a cumulative number of bits of decompressed data which is at least the desired given minimum number of bits or the second code is the last code in the non-long horizontal code series; and
e) selecting the decompressed data of the first two codes in the non-long horizontal code series and any one or more of the codes in the non-long horizontal code series following the first two codes in the same manner as the selection of the decompressed data of the first two codes in the non-long horizontal code series if the cumulative number of bits of decompressed data generated by the first two codes is less than the desired given minimum number of bits, determined by either the first two codes and the one or more codes generating a cumulative total of at least the desired given minimum number of bits and the cumulative number of bits of decompressed data generated by the codes in the non-long horizontal code series prior to the last code for which the decompressed data is selected is less than the desired given minimum number of bits or the last code selected is the last code in the non-long horizontal code series.

2. A programmable image data decompression apparatus when suitably programmed for carrying out the method of claim 1, the apparatus including a processor, memory, input/output circuitry and an optional user interface.

3. An apparatus for decompressing compressed image data comprising:
means (12) for receiving a series of a given number of at least three codes in one clock cycle and identifying them as long horizontal codes which generate greater than four bits of decompressed data, or non-long horizontal codes which generate four or less bits of decompressed data, the given number of codes equaling a desired given minimum number of bits of decompressed data to be generated during one clock cycle;
parallel decoding means (16) operatively connected to said receiving means;
long code decoding means (20) operatively connected to said receiving means;
said receiving means including means for sending the identified long horizontal codes to said long code decoding means and for sending, during one clock cycle, the identified non-long horizontal codes in a non-long horizontal code series of one or more non-long horizontal codes to said parallel decoding means;
said parallel decoding means (16) having a plurality of decoding means for decoding in parallel during one clock cycle each of the non-long horizontal codes received during such cycle by said parallel decoding means;
one of said plurality of parallel decoding means having a decoder (A) being so constructed and arranged to receive the first code of the non-long horizontal code series, the remaining of said plurality of parallel decoding means (B₁,B₂,B₃,C₁,C₂,D) being so constructed and arranged to receive all of the remaining codes in the non-long horizontal code series;
said parallel decoding means (16), for each of the remaining non-long horizontal codes received thereby, decoding during one clock cycle its respective remaining code for all possible conditions of the number of bits that can be generated during the same one clock cycle by those codes in the non-long horizontal code series preceding such respective one of the remaining codes, the possible conditions being a minimum cumulative number of bits that can be generated by those codes in the non-long horizontal code series preceding such respective one of the remaining codes up to one bit less than the desired given minimum number of bits decompressed data to be generated during one clock cycle;
said parallel decoding means (16) for each of the remaining codes of the non-long horizontal code series comprising a designated number of decoders equaling the number of all possible conditions of the number of bits, up to the desired given minimum number, that can be generated by those codes in the non-long horizontal code series preceding a respective one of the remaining codes, and when. the designated number of decoders for receiving a particular code is more than one, each of said decoders of said designated number of decoders decodes in parallel during the same clock cycle its respective code for a different particular one of the possible conditions.

4. The apparatus for decompressing compressed image data in accordance with claim 3, wherein said receiving means, said parallel decoding means, and said non-long horizontal code selecting means are so constructed and arranged that, within the same clock cycle, said receiving means identifies the non-long horizontal codes and sends them to said parallel decoding means and said parallel decoding means generates decompressed data of all non-long horizontal codes in the non-long horizontal code series received thereby from said receiving means and said non-long horizontal code selecting means selects the appropriate decompressed data of the non-long horizontal codes.

5. The apparatus for decompressing compressed image data in accordance with claim 3 or 4, wherein said receiving means includes means:
a) for sending, within the same clock cycle received, only one identified long horizontal code to said long code decoding means if such identified long horizontal code is the first code of the series of identified codes; and
b) for sending, within the same clock cycle received, a series of one or more consecutive identified non-long horizontal codes to said parallel decoding means if one of such identified non-long horizontal codes is the first code in the series of identified codes.

6. The apparatus for decompressing compressed image data in accordance with claim 3, 4 or 5, wherein:
a) said receiving means includes means for sending, within the same clock cycle received, only one identified long horizontal code to said long code decoding means if such identified long horizontal code is the first code of the series of identified codes and said non-long horizontal code selecting means selects, within the same clock cycle, the decompressed data of the only one identified long horizontal code;
b) said receiving means further includes means for sending, within the same clock cycle received, a series of one or more consecutive identified non-long horizontal codes to said parallel decoding means if one of such identified non-long horizontal codes is the first code in the series of identified codes and said parallel decoding means, within the same clock cycle, generates decompressed data of all non-long horizontal codes in the non-long horizontal code series received thereby from said receiving means and said non-long horizontal code and said selecting means, within the same clock cycle, selects the appropriate decompressed data of the non-long horizontal codes; and
c) said receiving means including means for sending either one long horizontal code to said long code decoding means or a non-long horizontal code series of one or more non-long horizontal codes to said parallel decoding means during one clock cycle.

## Patentansprüche

1. Verfahren zur Dekomprimierung komprimierter Bilddaten, das die Schritte umfaßt:
a) Nehmen einer Reihe einer gegebenen Anzahl von mindestens drei Codes und deren Identifikation in einem Taktzyklus als lange horizontale Codes, die mehr als vier Bit dekomprimierter Daten erzeugen, oder nicht lange horizontale Codes, die vier oder weniger Bit dekomprimierter Daten erzeugen;
b) parallele Decodierung während eines Taktzyklus einer nicht langen horizontalen Codereihe eines oder mehrerer nicht langer horizontaler Codes, wobei die Decodierung für jeden außer dem ersten Code der nicht langen Codereihe für alle möglichen Zustände der Bitzahl geschieht, die während desselben einen Taktzyklus durch jene Codes in der nicht langen horizontalen Codereihe erzeugt werden können, die einem jeweiligen der Codes der nicht langen Codereihe vorausgehen, wobei die möglichen Zustände eine minimale Summenzahl an Bits, die durch jene Codes in der nicht langen horizontalen Codereihe erzeugt werden können, die einem jeweiligen von jedem außer dem ersten Code der nicht langen Codereihe vorausgehen, bis zu einem Bit weniger als eine gewünschte minimale Bitzahl dekomprimierter Daten sind, die während eines Taktzyklus erzeugt werden sollen;
c) Auswählen der dekomprimierten Daten des ersten Codes in der nicht langen horizontalen Codereihe, wenn entweder der erste Code mindestens die gewünschte gegebene minimale Bitzahl dekomprimierter Daten erzeugt oder der erste Code der einzige Code in der nicht langen horizontalen Codereihe ist;
d) Auswählen der dekomprimierten Daten des ersten Codes in der nicht langen horizontalen Codereihe und der dekomprimierten Daten für den zweiten Code in der nicht langen horizontalen Codereihe, die dem möglichen Zustand der dekomprimierten Daten entsprechen, die mit der tatsächlichen Bitzahl übereinstimmt, die durch die dekomprimierten Daten des ersten Codes erzeugt werden, wenn die Bitzahl dekomprimierter Daten, die durch den ersten Code erzeugt werden, kleiner als die gewünschte gegebene minimale Bitzahl ist und beide der ersten beiden Codes eine Summenzahl an Bits dekomprimierter Daten erzeugen, die mindestens die gewünschte gegebene minimale Bitzahl ist, oder der zweite Code der letzte Code in der nicht langen horizontalen Codereihe ist; und
e) Auswählen der dekomprimierten Daten der ersten beiden Codes in der nicht langen horizontalen Codereihe und irgendeines oder mehrere der Codes in der nicht langen horizontalen Codereihe, die den ersten beiden Codes folgen, in derselben Weise wie die Auswahl der dekomprimierten Daten der ersten beiden Codes in der nicht langen horizontalen Codereihe, wenn die Summenzahl an Bits dekomprimierter Daten, die durch die ersten beiden Codes erzeugt werden, kleiner als die gewünschte gegebene minimale Bitzahl ist, bestimmt dadurch, daß entweder die ersten beiden Codes und der eine oder die mehreren Codes, die eine Gesamtsumme von mindestens der gewünschten gegebenen minimalen Bitzahl und der Summenzahl an Bits dekomprimierter Daten erzeugen, die durch die Codes in der nicht langen horizontalen Codereihe vor dem letzten Code erzeugt werden, für den die dekomprimierten Daten ausgewählt werden, kleiner als die gewünschte gegebene minimale Bitzahl ist oder der letzte ausgewählte Code der letzte Code in der nicht langen horizontalen Codereihe ist.

2. Programmierbare Bilddaten-Dekomprimierungsvorrichtung, zum Ausführen des Verfahrens nach Anspruch 1, wenn geeignet programmiert, wobei die Vorrichtung einen Prozessor, einen Speicher, einen Eingabe-/Ausgabeschaltungskomplex und eine optionale Benutzerschnittstelle umfaßt.

3. Vorrichtung zur Dekomprimierung komprimierter Bilddaten, die umfaßt:
eine Einrichtung (12) zum Empfangen einer Reihe einer gegebenen Anzahl von mindestens drei Codes in einem Taktzyklus und zu deren Identifikation als lange horizontale Codes, die mehr als vier Bit dekomprimierter Daten erzeugen, oder als nicht lange horizontale Codes, die vier oder weniger Bit dekomprimierter Daten erzeugen, wobei die gegebene Anzahl an Codes gleich einer gewünschten gegebenen minimalen Bitzahl dekomprimierter Daten ist, die während eines Taktzyklus erzeugt werden sollen;
eine Paralleldecodierungseinrichtung (16), die betriebsfähig mit der Empfangseinrichtung verbunden ist;
eine Langcode-Decodierungseinrichtung (20), die betriebsfähig mit der Empfangseinrichtung verbunden ist;
wobei die Empfangseinrichtung eine Einrichtung zum Senden der erkannten langen horizontalen Codes an die Langcode-Decodierungseinrichtung und zum Senden während eines Taktzyklus der erkannten nicht langen horizontalen Codes in einer nicht langen horizontalen Codereihe eines oder mehrerer nicht langer horizontaler Codes an die Paralleldecodierungseinrichtung umfaßt;
wobei die Paralleldecodierungseinrichtung (16) mehrere Decodierungseinrichtungen zur parallelen Decodierung während eines Taktzyklus jedes der nicht langen horizontalen Codes umfaßt, die während eines solchen Zyklus durch die Paralleldecodierungseinrichtung empfangen werden;
wobei einer der mehreren Paralleldecodierungseinrichtungen einen Decodierer (A) umfaßt, der so aufgebaut und eingerichtet ist, daß er den ersten Code der nicht langen horizontalen Codereihe empfängt, und der Rest der mehreren Paralleldecodierungseinrichtungen (B₁,B₂,B₃,C₁,C₂,D) so aufgebaut und eingerichtet ist, daß er alle restlichen Codes der nicht langen horizontalen Codereihe empfängt;
wobei die Paralleldecodierungseinrichtung (16) für jeden der restlichen nicht langen horizontalen Codes, die dadurch empfangen werden, während eines Taktzyklus ihren jeweiligen restlichen Code für alle möglichen Zustände der Zahl an Bits decodiert, die während desselben einen Taktzyklus durch jene Codes in der nicht langen horizontalen Codereihe erzeugt werden können, die einem solchen jeweiligen der restlichen Codes vorausgehen, wobei die möglichen Zustände eine minimale Summenzahl an Bits sind, die durch jene Codes in der nicht langen horizontalen Codereihe erzeugt werden können, die einem solchen jeweiligen der restlichen Codes vorausgehen, die bis zu einem Bit kleiner als die gewünschte gegebene minimale Bitzahl dekomprimierter Daten sind, die während eines Taktzyklus erzeugt werden sollen;
wobei die Paralleldecodierungseinrichtung (16) für jeden der restlichen Codes der nicht langen horizontalen Codereihe eine bestimmte Anzahl von Decodierern umfaßt, die gleich der Anzahl aller möglichen Zustände der Zahl an Bits ist, bis zu der gewünschten gegebenen minimalen Anzahl, die durch jene Codes in der nicht langen horizontalen Codereihe erzeugt werden kann, die einem jeweiligen der restlichen Codes vorausgehen, und wenn die bestimmte Anzahl an Decodierern zum Empfangen eines bestimmten Codes mehr als eins ist, jeder der Decodierer der bestimmten Anzahl an Decodierern parallel während desselben Taktzyklus seinen jeweiligen Code für einen anderen bestimmten der möglichen Zustände decodiert.

4. Vorrichtung zur Dekomprimierung komprimierter Bilddaten nach Anspruch 3, wobei die Empfangseinrichtung, die Paralleldecodierungseinrichtung und die Einrichtung zum Auswählen nicht langen horizontalen Codes so aufgebaut und eingerichtet sind, daß innerhalb desselben Taktzyklus die Empfangseinrichtung die nicht langen horizontalen Codes identifiziert und sie an die Paralleldecodierungseinrichtung schickt, und die Paralleldecodierungseinrichtung dekomprimierte Daten aller nicht langer horizontalen Codes in der nicht langen horizontalen Codereihe erzeugt, die dadurch von der Empfangseinrichtung empfangen werden, und die Einrichtung zum Auswählen nicht langen horizontalen Codes die geeigneten dekomprimierten Daten der nicht lange horizontalen Codes auswählt.

5. Vorrichtung zur Dekomprimierung komprimierter Bilddaten nach Anspruch 3 oder 4, wobei die Empfangseinrichtung Einrichtungen umfaßt:
a) zum Senden innerhalb desselben empfangenen Taktzyklus nur eines erkannten langen horizontalen Codes an die Langcode-Decodierungseinrichtung, wenn ein solcher erkannter langer horizontaler Code der erste Code der Reihe erkannter Codes ist; und
b) zum Senden innerhalb desselben empfangenen Taktzyklus einer Reihe eines oder mehrerer aufeinanderfolgender erkannter nicht langer horizontaler Codes an die Paralleldecodierungseinrichtung, wenn ein solcher erkannter nicht langer horizontaler Codes der erste Code in der Reihe erkannter Codes ist.

6. Vorrichtung zur Dekomprimierung komprimierter Bilddaten nach Anspruch 3, 4 oder 5, wobei:
a) die Empfangseinrichtung eine Einrichtung zum Senden innerhalb desselben empfangenen Taktzyklus nur eines erkannten langen horizontalen Codes an die Langcode-Decodierungseinrichtung umfaßt, wenn ein solcher erkannter langer horizontaler Code der erste Code der Reihe erkannter Codes ist, und die Einrichtung zum Auswählen nicht langen horizontalen Codes innerhalb desselben Taktzyklus die dekomprimierten Daten des nur einen erkannten langen horizontalen Codes auswählt;
b) die Empfangseinrichtung ferner eine Einrichtung zum Senden innerhalb desselben empfangenen Taktzyklus einer Reihe eines oder mehrerer aufeinanderfolgender erkannter nicht langer horizontaler Codes an die Paralleldecodierungseinrichtung umfaßt, wenn ein solcher erkannter nicht langer horizontaler Codes der erste Code in der Reihe erkannter Codes ist, und die Paralleldecodierungseinrichtung innerhalb desselben Taktzyklus dekomprimierte Daten aller nicht langen horizontalen Codes in der nicht langen horizontalen Codereihe, die dadurch von der Empfangseinrichtung empfangen werden, und des nicht langen horizontalen Codes erzeugt, und die Auswahleinrichtung innerhalb desselben Taktzyklus die geeigneten dekomprimierten Daten der nicht langen horizontalen Codes auswählt; und
c) die Empfangseinrichtung eine Einrichtung zum Senden entweder eines langen horizontalen Codes an die Langcode-Decodierungseinrichtung oder einer nicht langen horizontalen Codereihe eines oder mehrerer nicht langer horizontaler Codes an die Paralleldecodierungseinrichtung während eines Taktzyklus umfaßt.

## Revendications

1. Procédé de décompression de données d'image compressées comprenant les étapes consistant à :
a) prendre une série d'un nombre donné d'au moins trois codes et, dans un cycle d'horloge, les identifier comme des codes horizontaux longs qui génèrent plus de quatre unités binaires de données décompressées, ou comme des codes horizontaux non-longs qui génèrent quatre ou moins de quatre unités binaires de données décompressées ;
b) décoder en parallèle, au cours d'un cycle d'horloge, une série de codes horizontaux non longs d'un ou plus d'un code horizontal non long avec le décodage de chaque code sauf le premier code de la série de codes horizontaux non longs se faisant pour toutes les conditions possibles de nombre d'unités binaires qui peuvent être générées au cours du même cycle d'horloge unique par ces codes dans la série de codes horizontaux non longs précédant un code respectif dans la série de codes non longs, les conditions possibles étant un nombre cumulatif minimal d'unités binaires qui peuvent être générées par ces codes dans la série de codes horizontaux non longs précédant un code respectif dans la série de codes non longs à l'exception du premier code de la série des codes non longs jusqu'à une unité binaire de moins qu'un nombre minimal désiré donné d'unités binaires de données décompressées à générer au cours d'un cycle d'horloge :
c) sélectionner les données décompressées du premier code dans la série de codes horizontaux non longs, soit si le premier code génère au moins le nombre minimal désiré donné d'unités binaires de données décompressées, soit si le premier code est le seul code dans la série de codes horizontaux non longs ;
d) sélectionner les données décompressées du premier code dans la série de codes horizontaux non longs et les données décompressées pour le deuxième code dans la série de codes horizontaux non longs, qui correspondent à la condition possible de données décompressées qui s'adapte au nombre réel d'unités binaires générées par les données décompressées du premier code, si le nombre d'unités binaires des données décompressées générées par le premier code est inférieur au nombre minimal désiré donné d'unités binaires et si les deux premiers codes génèrent un nombre cumulatif d'unités binaires de données décompressées qui soit au moins le nombre minimal désiré donné d'unités binaires ou si le second code est le dernier code dans la série de codes horizontaux non longs ; et
e) sélectionner les données décompressées des deux premiers codes dans la série de codes horizontaux non longs et un quelconque ou plus d'un des codes dans la série de codes horizontaux non longs suivant les deux premiers codes de la même manière que pour la sélection des données décompressées des deux premiers codes dans la série de codes horizontaux non longs si le nombre d'unités binaires des données décompressées générées par les deux premiers codes est inférieur au nombre minimal désiré donné d'unités binaires, déterminé soit par les deux premiers codes et l'un ou plus d'un autre code générant un total cumulatif d'au moins le nombre minimal désiré donné d'unités binaires et si le nombre cumulatif d'unités binaires de données décompressées générées par les codes dans la série de codes horizontaux non longs avant le dernier code pour lequel les données décompressées sont sélectionnées est inférieur au nombre minimal désiré donné d'unités binaires, soit si le dernier code sélectionné est le dernier code dans la série de codes horizontaux non longs.

2. Appareil programmable de décompression de données d'image, programmé de manière appropriée pour mener à bien le procédé selon la revendication 1, l'appareil comprenant un processeur, une mémoire, des circuits entrée/sortie et, en option, une interface utilisateur.

3. Appareil de décompression de données d'image comprenant :
un moyen (12) de réception d'une série d'un nombre donné d'au moins trois codes au cours d'un cycle d'horloge et d'identification de ceux-ci comme codes horizontaux longs générant plus de quatre unités binaires de données décompressées, ou comme codes horizontaux non longs générant quatre ou moins de quatre unités binaires de données décompressées, le nombre de codes donné étant égal à un nombre minimal désiré donné d'unités binaires de données décompressées à générer au cours d'un cycle d'horloge ;
un moyen de décodage parallèle (16) fonctionnant en connexion avec ledit moyen de réception ;
un moyen de décodage de code long (20) fonctionnant en connexion avec ledit moyen de réception ;
ledit moyen de réception comprenant un moyen d'envoi des codes horizontaux longs identifiés audit moyen de décodage de code long et d'envoi, au cours d'un cycle d'horloge, des codes horizontaux non longs identifiés dans une série de codes horizontaux non longs d'un ou de plus d'un code horizontal non long audit moyen de décodage en parallèle ;
ledit moyen de décodage en parallèle (16) possédant plusieurs moyens de décodage pour le décodage en parallèle, au cours d'un cycle d'horloge, de chacun des codes horizontaux non longs reçus au cours d'un tel cycle par ledit moyen de décodage en parallèle ;
l'un desdits plusieurs moyens de décodage en parallèle possédant un décodeur (A) réalisé et disposé de manière à recevoir le premier code de la série de codes horizontaux non longs, le reste desdits plusieurs moyens de décodage en parallèle (B₁, B₂, B₃, C₁, C₂, D) étant réalisé et disposé de manière à recevoir tous les codes restants dans la série de codes horizontaux non longs ;
ledit moyen de décodage en parallèle (16), pour chacun des codes horizontaux non longs restants ainsi reçus, décodant au cours d'un cycle d'horloge son code restant respectif pour toutes les conditions possibles de nombre d'unités binaires qui peuvent être générées au cours de ce même cycle d'horloge par ces codes dans la série de codes horizontaux non longs précédant un tel code respectif parmi les codes restants, les conditions possibles étant un nombre cumulatif minimal d'unités binaires qui peuvent être générées par ces codes dans la série de codes horizontaux non longs précédant un tel code respectif parmi les codes restants jusqu'à une unité binaire de moins que le nombre minimal désiré donné d'unités binaires de données décompressées à générer au cours d'un cycle d'horloge ;
ledit moyen de décodage en parallèle (16), pour chacun des codes horizontaux non longs restants de la série de codes horizontaux non longs, comprenant un nombre déterminé de décodeurs égal au nombre de toutes les conditions possibles de nombre d'unités binaires, jusqu'au nombre minimal désiré donné qui peuvent être générées par ces codes dans la série de codes horizontaux non longs précédant un code respectif parmi les codes restants, et, quand le nombre déterminé de décodeurs est supérieur à un, chacun desdits décodeurs dudit nombre déterminé de décodeurs décodant en parallèle au cours du même cycle d'horloge son code respectif pour une condition particulière différente parmi les conditions possibles.

4. Appareil de décompression de données d'image compressées en conformité avec la revendication 3, dans lequel ledit moyen de réception, ledit moyen de décodage en parallèle et ledit moyen de sélection de code horizontal non long sont réalisés et disposés d'une manière telle qu'au cours du même cycle d'horloge, ledit moyen de réception identifie les codes horizontaux non longs et les adresse audit moyen de décodage en parallèle, que ledit moyen de décodage en parallèle génère des données décompressées de tous les codes horizontaux non longs dans la série de codes horizontaux non longs ainsi reçus dudit moyen de réception, et que ledit moyen de sélection de code horizontal non long sélectionne les données décompressées appropriées des codes horizontaux non longs.

5. Appareil de décompression de données d'image compressées en conformité avec la revendication 3 ou 4, dans lequel ledit moyen de réception comprend des moyens ;
a) d'envoi, au cours du même cycle d'horloge reçu, d'un seul code horizontal long identifié audit moyen de décodage de code long si le code horizontal long ainsi identifié est le premier code dans la série des codes identifiés ; et
b) d'envoi, au cours du même cycle d'horloge reçu, d'un ou de plus d'un parmi les codes horizontaux non longs identifiés consécutifs audit moyen de décodage en parallèle si l'un des codes horizontaux non longs ainsi identifié est le premier code dans la série des codes identifiés.

6. Appareil de décompression de données d'image compressées en conformité avec la revendication 3, 4 ou 5, dans lequel :
a) ledit moyen de réception comprend un moyen d'envoi, au cours du même cycle d'horloge reçu, d'un seul code horizontal long identifié audit moyen de décodage de code horizontal long si le code horizontal long ainsi identifié est le premier code dans la série des codes identifiés, et dans lequel ledit moyen de sélection de code horizontal non long sélectionne, au cours du même cycle d'horloge, les données décompressées d'un seul code horizontal long identifié ;
b) ledit moyen de réception comprend de plus un moyen d'envoi, au cours du même cycle d'horloge reçu, d'un ou de plus d'un parmi les codes horizontaux non longs identifiés consécutifs audit moyen de décodage en parallèle si l'un des codes horizontaux non longs ainsi identifié est le premier code dans la série des codes identifiés, dans lequel ledit moyen de décodage en parallèle, au cours du même cycle d'horloge, génère les données décompressées de tous les codes horizontaux non longs dans la série de codes horizontaux non longs ainsi reçus dudit moyen de réception, et dans lequel ledit code horizontal non long et ledit moyen de sélection, au cours du même cycle d'horloge, sélectionnent les données décompressées appropriées des codes horizontaux non longs ; et
c) ledit moyen de réception comprend un moyen d'envoi soit d'un code horizontal long audit moyen de décodage de code long, soit d'une série de codes horizontaux non longs d'un ou de plus d'un code horizontal non long audit moyen de décodage en parallèle au cours d'un cycle d'horloge.
